Europäisches Patentamt

European Patent Office

Office européen des brevets

(11) Veröffentlichungsnummer: **0 237 750 B1**

(19)

# EUROPÄISCHE PATENTSCHRIFT

(12)

(45) Veröffentlichungstag der Patentschrift: **06.11.91**

(51) Int. Cl.⁵: **F04B 1/20**

(21) Anmeldenummer: **87101514.5**

(22) Anmeldetag: **04.02.87**

(54) **Schwenklager für die Verstellvorrichtung einer Axial-Kolbenmaschine.**

(30) Priorität: **25.02.86 DE 3606034**

(43) Veröffentlichungstag der Anmeldung:
**23.09.87 Patentblatt 87/39**

(45) Bekanntmachung des Hinweises auf die
Patenterteilung:
**06.11.91 Patentblatt 91/45**

(84) Benannte Vertragsstaaten:
**DE FR GB IT SE**

(56) Entgegenhaltungen:
**DE-A- 1 575 504**
**DE-A- 2 625 298**
**DE-B- 2 048 164**
**US-A- 2 342 302**

(73) Patentinhaber: **BRUENINGHAUS HYDRAULIK GmbH**
**An den Kelterwiesen 14**
**W-7240 Horb 1(DE)**

(72) Erfinder: **Pecnik, Ivan**
**Albert-Krieg-Str. 23**
**W-7270 Nagold(DE)**

(74) Vertreter: **Körber, Wolfhart, Dr.rer.nat. et al**
**Patentanwälte Dipl.-Ing. H. Mitscherlich**
**Dipl.-Ing. K. Gunschmann Dr.rer.nat. W. Körber Dipl.Ing. J. Schmidt-Evers Dipl.-Ing. W. Melzer Steinsdorfstrasse 10**
**W-8000 München 22(DE)**

**Beschreibung**

Die Erfindung bezieht sich auf ein Schwenklager nach dem Oberbegriff des Anspruchs 1.

Es ist bei Axialkolbenmaschinen bekannt, das Schwenklager in Form einer Wiege mit einem konkaven und einem konvexen Lagerteil auszugestalten, deren entsprechend zylindrische Lagerflächen bei Zwischenlage eines Wälzlagersegments mit in einem Käfig gehaltenen Wälzlagern beim Verschwenken der Verstellvorrichtung aneinander abrollen. Dabei führt bei Schrägscheibenmaschinen das konvexe Lagerteil und bei Schrägachsenmaschinen das konkave Lagerteil die Schwenkbewegung aus. Um zu verhindern, daß das Wälzlager aus seinem ihm vorgegebenen günstigen Bewegungsbereich verrutscht, beispielsweise aufgrund von schnellen Schwenkbewegungen und/oder der Massenträgheit des Wälzlagersegments beim Vorhandensein eines notwendigen Lagerspiels, ist es aus der DE-B-20 48 164 bekannt, Anschläge zur Begrenzung der Bewegung des Wälzlagersegments vorzusehen. Die Anschläge werden durch zusätzliche Anschlagstücke gebildet, die mittels Schrauben an dem die Schrägscheibe tragenden Gehäuseteil befestigt sind.

Diese bekannte Ausgestaltung ist kompliziert und teuer in der Herstellung, weil mehrere separate Bauteile und Befestigungselemente herzustellen und zu montieren bzw. zu demontieren sind. Da außerdem das Wälzlagersegment unmittelbar zwischen der Schrägscheibe und einem Lagerträger des Gehäuses der Axialkolbenmaschine gelagert ist, muß der Lagerträger als Block aus verschleißfestem, d.h. hochwertigem Lagermaterial hergestellt werden, wodurch sich die Herstellung ebenfalls verteuert.

Zur Einsparung von Lagermaterial ist aus der DE-A-2 625 298 die Verwendung einer Lagerschale bekannt, die auf dem Lagerträger des Gehäuses einer SchrägscheibenAxialkolbenmaschine befestigt ist und als Laufbahn für das Wälzlagersegment dient. Letzteres ist durch eine Nachführeinrichtung in seinem günstigen Bewegungsbereich gehalten. Diese Nachführeinrichtung ist ebenfalls vielgliedrig, kompliziert und teuer in der Herstellung, da ihre Elemente nicht nur im weitesten Sinn die Funktion der Anschläge übernehmen, sondern hauptsächlich auf das Wälzlagersegment wirkende elastische Rückstellkräfte entwickeln, wenn das Wälzlagersegment seinen günstigen Bewegungsbereich zu verlassen droht.

Der Erfindung liegt die Aufgabe zugrunde, ein Schwenklager der eingangs genannten Art so weiterzubilden, daß der Konstruktions- und Kostenaufwand zur Begrenzung der Bewegung des Wälzlagersegments sowie zur Befestigung einer Lagerschale vereinfacht ist.

Diese Aufgabe wird durch die Merkmale des Anspruchs 1 gelöst.

Bei der erfindungsgemäßen Ausgestaltung ist wenigsten eine Lagerfläche durch eine Lagerschale gebildet, bei der es sich um ein verhältnismäßig kleines und deshalb hinsichtlich des Lagermaterials sparsames sowie auch als hartes bzw. verschleißfestes Teil bezüglich der erfindungsgemäßen Formgebung leicht und kostengünstig herstellbares Bauteil handelt. Dabei sind die Anschläge einstückig an die Lagerschale angeformt, so daß es zusätzlicher Teile und zusätzlicher Befestigungen für die Anschläge nicht bedarf. Außerdem ist die Lagerschale lose eingelegt und lediglich durch die Ansätze sicher am betreffenden Lagerteil gehalten. Es bedarf keiner aufwendigen Befestigung, wie z.B. in Form einer metallischen Verbindung mit dem Lagerteil. Ferner sind die Ansätze ebenfalls einstückig an der Lagerschale angeformt, so daß es auch hier keiner separaten zusätzlichen Bauteile bedarf. Da es sich bei der Lagerschale im Vergleich mit den gegeneinander verschwenkbaren Lagerteilen um ein verhältnismäßig kleines Bauteil handelt, können bei ihrer Fertigung sowohl die Anschläge als auch die Ansätze in einfacher Weise hergestellt werden, insbesondere wenn es sich um Ausbiegungen bzw. Zungen nach den Ansprüchen 2 bis 4 handelt.

Im Anspruch 5 ist eine Ausbildung enthalten, die zum einen ebenfalls eine leichte Herstellung ermöglicht und zum anderen die Lagerschale beim Ausbiegen der Anschläge und Ansätze vor großen Beanspruchungen freistellt.

Die Ausgestaltung nach Anspruch 6 ist aus Gründen der Raumersparnis zu empfehlen, weil die Ansätze im betreffenden Lagerteil versenkt werden können.

Die Ausgestaltung nach Anspruch 7 ermöglicht eine Dämpfung des Stoßes, wenn das Wälzlagersegment gegen die Anschläge stößt. Hierdurch werden sowohl Deformationen an den Anschlagflächen vermieden als auch das Laufgeräusch verringert.

Vergleichbare Stöße ergeben sich auch zwischen der Lagerschale und ihrem Sitz am sie tragenden Lagerteil und zwar aufgrund von Fertigungstoleranzen des Lagerschalensitzes. Die Ausbildung nach Anspruch 8 trägt hier dazu bei, solche Stöße zu vermeiden. Dabei können die Dämpfungselemente sowohl zwischen den Anschlägen und den ihnen zugeordneten Stirnenden des Wälzlagersegmentes als auch zwischen den Ansätzen und den ihnen zugeordneten Anlageflächen des betreffenden Lagerteils angeordnet sein. Hierdurch werden sowohl die zwischen dem Wälzlagersegment und der Lagerschale als auch zwischen letzterer und den betreffenden Lagerteilen wirksamen Stöße vermieden.

Die Anordnung nach Anspruch 10 trägt dazu bei, leichte Gleitbewegungen in Umfangsrichtung der Lagerschale zu ermöglichen, um die Dämpfung zwischen der Lagerschale und dem betreffenden Lagerteil wirksamer werden zu lassen.

Die Dämpfungselemente können nach Anspruch 9 in einfacher Weise durch Federelemente, z.B. Druckfedern gebildet werden, die z.B. zwischen den Anschlagflächen frei eingelegt oder jeweils an einer der Anschlagflächen befestigt sein können.

Den Dämpfungselementen ist auch eine gewisse Nachführungsfunktion zuzurechnen, die aufgrund der Spannung beruht, die die Dämpfungselemente mittelbar oder unmittelbar auf die Lagerschale ausüben.

Nachfolgend wird die Erfindung anhand in Zeichnungen vereinfacht dargestellter bevorzugter Ausführungsbeispiele beschrieben. Es zeigt:

Fig. 1     eine Axial-Kolbenmaschine der Schrägscheibenbauart in prinzipieller Darstellung und im teilweisen axialen Schnitt;

Fig. 2     eine vergrößert dargestellte Einzelheit des Schwenklagers der Axialkolbenmaschine gesehen in Richtung des Pfeiles II in Fig. 1;

Fig. 3 und 4     weitere Ausführungsbeispiele eines Schwenklagers mit Anschlagdämpfung.

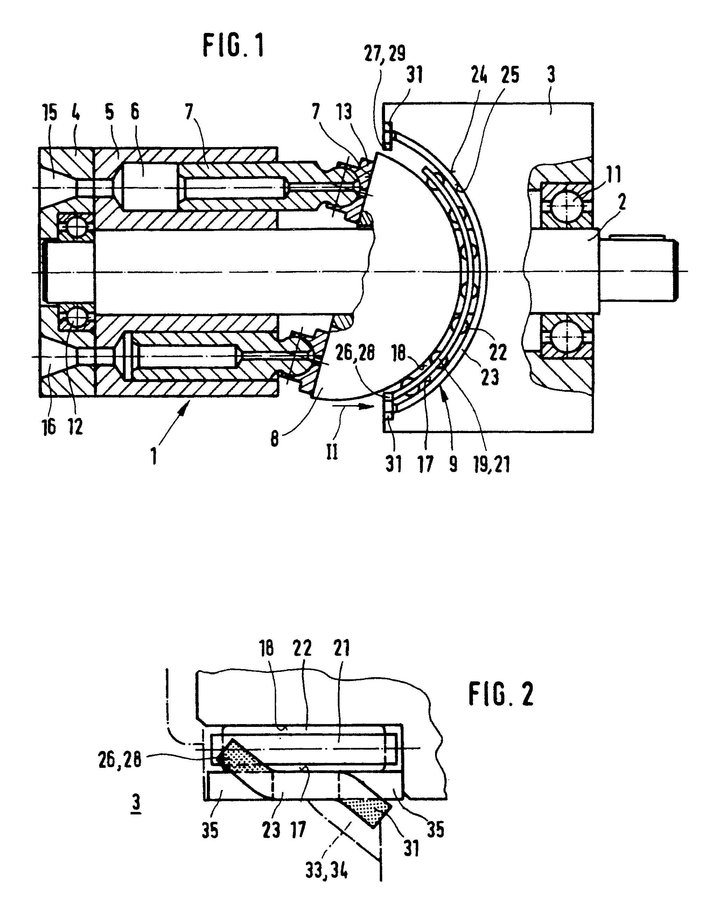

Von der in Fig. 1 allgemein mit 1 bezeichneten Axial-Kolbenmaschine sind aus Vereinfachungsgründen lediglich eine Antriebswelle 2, ein Lagerteil 3, ein Steuerspiegelkörper 4, eine Zylindertrommel 5 mit darin in axialen Zylinderbohrungen 6 verschiebbaren Kolben 7, eine Schrägscheibe 8 und ein Schwenklager 9 für die Schrägscheibe 8 in Form einer Wiege dargestellt.

Die Antriebswelle 2 ist mittels Wälzlagern 11, 12 im Lagerteil 3 und im Steuerspiegelkörper 4 drehbar gelagert, die im nicht dargestellten Gehäuse der Axialkolbenmaschine 1 festgelegt sind. Im Betrieb der Axial-Kolbenmaschine 1 wird die Zylindertrommel 5 durch Drehen der Antriebswelle 2 in Rotation versetzt, wobei die Kolben 7 mittels Gleitschuhen 13 an der Schrägfläche 7 der Schrägscheibe 8 gleiten und aufgrund der Schrägstellung der Schrägscheibe 8 Hubbewegungen ausführen, die je nach Anwendung der Axial-Kolbenmaschine 1 als Pumpe oder Motor eine Saug-bzw. Druckströmung in den Strömungsleitungen 15, 16 erzeugen.

Das Schwenklager 9 wird durch eine konkave zylindersegmentförmige Lagerfläche 17, eine konvexe zylindersegmentförmige Lagerfläche 18 und ein Wälzlagersegment 19 gebildet, das aus mehreren, in einem Käfig 21 voneinander distanzierten Wälzlagerkörpern 22 besteht. Die konkave zylindersegmentförmige Lagerfläche 17 wird durch eine Lagerschale 23 gebildet, die mit ihrer Außenfläche 24 an einer konkav zylindersegmentförmigen Stützfläche 25 des Lagerteils 3 anliegt.

Die Lagerschale 23 und die Schrägscheibe 8 bestehen aus hartem verschleißfestem Material, um bei den im Betrieb der Axialkolbenmaschine 1 verhältnismäßig hohen, auf das Schwenklager 9 wirkenden Druckkräften eine lange Lebensdauer zu gewährleisten. Im vorliegenden Falle besteht das Lagerteil 3 aus einem weniger verschleißfesten Material. Es ist deshalb die Lagerschale 23 angeordnet, um die verschleißfeste konkave zylindersegmentförmige Lagerfläche 17 zu bilden. Bei einer Schwenkung der Schrägscheibe 8, was durch aus Vereinfachungsgründen ebenfalls nicht dargestellten Verstellgliedern einer Verstellvorrichtung bewirkt wird, führt das Wälzlagersegment 19 eine Bewegung aus, die aufgrund der Abrollung etwa die Hälfte des Weges beträgt, den die Schrägscheibe 8 ausführt.

Um ein Herauswandern des Wälzlagersegments 19 zu verhindern, sind an den Enden der Lagerschale 23 Anschläge 26, 27 vorgesehen, die in die Bewegungsbahn des Wälzlagersegmentes 19 hineinragen und somit dessen Bewegung durch Anschlag mit dem Käfig 21 begrenzen. Die Anschläge 26, 27 sind durch radial nach innen von der Lagerschale 22 abstehende Vorsprünge 28, 29 gebildet.

Die Lagerschale 23 weist an ihren Enden auch etwa radial nach außen gerichtete weitere Vorsprünge 31 auf, die mit ihren der Lagerschale 23 zugewandten Innenseiten 32 an Anlageflächen 33 des Lagerteils 3 anliegen. Infolgedessen ist die Lagerschale 23 in Umfangsrichtung unverschieblich am Lagerteil 3 festgelegt. Die Anlageflächen 33 sind Wandflächen von Nuten 34, in die die Vorsprünge 31 einfassen.

Die Vorsprünge 28, 29 und 31 sind vorzugsweise einstückig angeformt bzw. durch Ausbiegungen gebildet.

Bei der in Fig. 2 dargestellten bevorzugten Ausgestaltung sind die Vorsprünge 28, 29 und 31 durch S-förmig ausgebogene Zungen gebildet, die durch beiderseits der Lagerschale und von deren Schmalseiten her angebrachte Einschnitte 35 teilweise von der Lagerschale 23 getrennt sind. Die Zungen sind soweit ausgebogen, daß sie vor die Stirnenden des Käfigs 21 bzw. in die Nuten 34 ragen.

Die Anordnung ist so getroffen, daß die durch die Vorsprünge 28, 29 gebildeten Anschläge 26, 27 sich an den Stellen befinden, den die Stirnenden des Käfigs 23 in der Normalstellung der Wälzlagersegments 29 bei der Maximal- bzw. Minimalverschwenkung der Schrägscheibe 8 einnehmen. In der in Fig. 1 dargestellten Position befindet sich die Schrägscheibe 8 in ihrer maximalen Ausschwenkstellung. Der Käfig 21 liegt am Anschlag 26 an. Bei der minimalen Ausschwenkstellung der Schrägscheibe liegt der Käfig 21 am Anschlag 27 an.

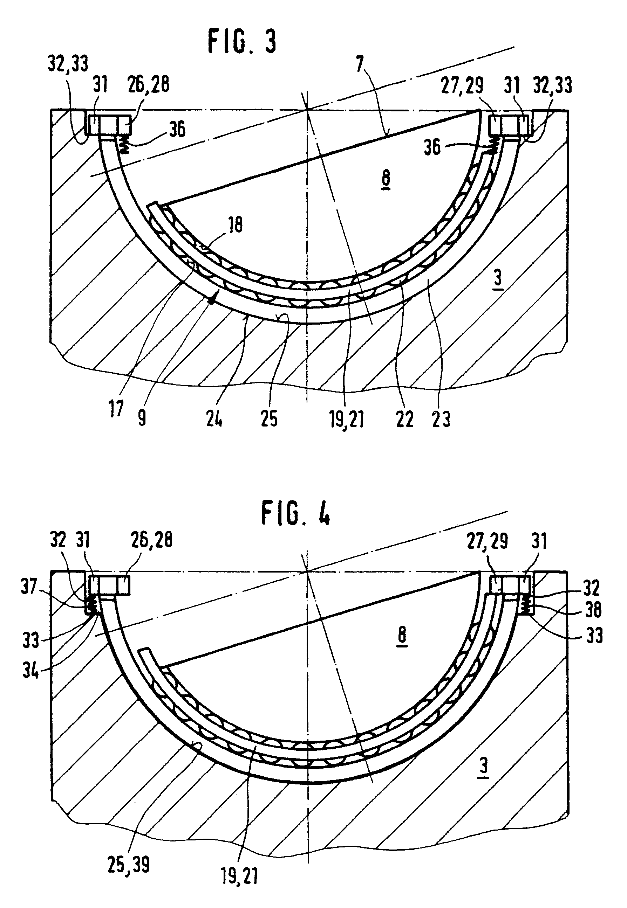

Zwecks Dämpfung der Stöße, die insbesondere ein verlagertes Wälzlagersegment 19 an den Anschlägen 26, 27 verursacht sind zwischen den Anschlägen 26, 27 und den freien Enden des Käfigs 21 Dämpfungselemente wie Druckfedern 36 vorgesehen, die an den die Anschläge 26, 27 bildenden Vorsprüngen 28, 29 befestigt sein können (vgl. Fig. 3).

Eine vergleichbare Dämpfungswirkung kann bei dem Ausführungsbeispiel gemäß Fig. 4 auch dadurch erreicht werden, daß Dämpfungselemente wie Druckfedern 37, 28 zwischen den Innenseiten 32 der Vorsprünge 31 und den Anschlagflächen 33 des Lagerteils 3 angeordnet sind. Um die Zwischenlage der Dämpfungselemente zu ermöglichen, sind die Nuten 34 tiefer ausgebildet, um die Dämpfungselemente aufnehmen zu können.

Bei dieser Ausgestaltung erfolgt die Dämpfung über die Lagerschale 23, d.h. die Lagerschale muß sich um ein gewisses Maß in Umfangsrichtung bewegen, um die Dämpfung zur Wirkung kommen zu lassen, so daß bei einem Stoß des Käfigs 21 gegen den Anschlag 27 in Fig. 4 die Lagerschale 23 sich um ein gewisses Maß mitbewegt und dadurch die mit 38 bezeichnete Druckfeder zusammenpreßt, wodurch die Dämpfung hervorgerufen wird. Die mit 37 bezeichnete Durckfeder wird zusammengepreßt, wenn der Käfig 21 gegen den Anschlag 26 stößt. Um bei dieser Ausgestaltung die Wirksamkeit der Dämpfungselemente zu verbessern, ist die Stützfläche 25 des Lagerteils und/oder die Außenfläche 24 der Lagerschale 23 mit einer Gleitschicht 39 versehen, wodurch die Beweglichkeit der Lagerschale 23 leichtgängig und deshalb die Wirksamkeit der Dämpfung verbessert wird.

Die Erfindung läßt sich auch an solchen Schwenklagern verwirklichen, bei denen nicht das konvexe Lagerteil (Schrägscheibe 8) sondern das konkave Lagerteile das bewegliche Lagerteil ist.

## Patentansprüche

1. Schwenklager für die Verstellvorrichtung einer Axialkolbenmaschine veränderlichen Durchsatzvolumens, insbesondere einer Axial-Kolbenmaschine in Schrägscheibenbauart, mit zwei relativ zueinander verschwenkbaren Lagerteilen, von denen das eine eine konkave zylindersegmentförmige Lagerfläche und das andere eine konvexe zylindersegmentförmige Lagerfläche gleichen Krümmungsmittelpunktes aufweist, zwischen denen ein Wälzlagersegment gelagert ist, und mit Anschlägen zur Begrenzung der Bewegung des Wälzlagersegmentes, **dadurch gekennzeichnet,** daß wenigstens eine der Lagerflächen (17, 18) in an sich bekannter Weise durch eine Lagerschale (23) gebildet ist, die an einer Stützfläche (25) des betreffenden Lagerteils (3) angelegt und an letzterem mittels Ansätzen (31) gesichert ist, die als einstückig an den Enden der Lagerschale (23) angeformte Vorsprünge ausgebildet sind und mit ihren einander zugewandten Innenseiten (32) an Anlageflächen (33) des die Lagerschale (23) stützenden Lagerteils (3) anliegen, und daß die Anschläge (26, 27) zur Begrenzung der Bewegung des Wälzlagersegmentes (19) als weitere, ebenfalls einstückig an den Enden der Lagerschale (23) angeformte Vorsprünge (26,28; 27,29) ausgebildet sind.

2. Schwenklager nach Anspruch 1, **dadurch gekennzeichnet,** daß die Vorsprünge (28,31; 29, 31) durch Ausbiegungen der Lagerschale (23) gebildet sind.

3. Schwenklager nach Anspruch 1 oder 2, **dadurch gekennzeichnet,** daß die Vorsprünge (28, 31; 29, 31) sich radial erstrecken.

4. Schwenklager nach Anspruch 2 und 3, **dadurch gekennzeichnet,** daß die Ausbiegungen durch entlang von Einschnitten (35) ausgebogenen Zungen gebildet sind.

5. Schwenklager nach Anspruch 4, **dadurch gekennzeichnet,** daß die Lagerschale (23) beiderseits von ihren Schmalseiten her eingeschnitten ist und die Ausbiegungen S -förmig ausgebogen sind.

6. Schwenklager nach wenigstens einem der vorhergehenden Ansprüche, **dadurch gekennzeichnet,** daß Nuten (34) im betreffenden Lagerteil (3) zur Aufnahme der Ansätze (31) vorgesehen sind.

7. Schwenklager nach wenigstens einem der vorhergehenden Ansprüche, **dadurch gekennzeichnet,** daß zwischen den Anschlägen (26, 27) und den Stirnenden des Wälzlagersegments (9) Dämpfungselemente angeordnet sind.

8. Schwenklager nach wenigstens einem der vorhergehenden Ansprüche, **dadurch gekennzeichnet,** daß zwischen den Ansätzen (31) und den Anlageflächen (33) Dämpfungselemente angeordnet sind.

9. Schwenklager nach Anspruch 7 oder 8, **da-**

durch gekennzeichnet, daß die Dämpfungselemente durch Federn (Druckfedern 36 bis 38) gebildet sind.

10. Schwenklager nach Anspruch 8, **dadurch gekennzeichnet,** daß die die Lagerschale (23) tragende Stützfläche (25) des Lagerteils (3) und/oder die Außenfläche (24) der Lagerschale (23) mit einer Gleitschicht (39) versehen ist.

**Claims**

1. A tilting bearing for the adjusting device of a variable displacement axial piston machine, in particular an axial piston machine of the swashplate type, comprising two bearing parts tiltable relative to one another, one having a concave bearing surface shaped as a segment of a cylinder and the other a convex bearing surface shaped as a segment of a cylinder having the same centre of curvature, between which a rolling bearing segment is mounted, and comprising stops to limit the movement of the rolling bearing segment, characterised in that at least one of the bearing surfaces (17, 18) is formed in known manner by a bearing shell (23) that is in contact with a supporting surface (25) of the respective bearing part (3) and is secured thereto by means of lugs (31) in the form of projections that are formed integrally on the ends of the bearing shell (23) and have their mutually facing inner sides (32) in contact with contact surfaces (33) of the bearing part (3) that supports the bearing shell (23), and that the stops (26, 27) for limiting the movement of the rolling bearing segment (19) are in the form of further projections (26, 28; 27, 29) that are likewise formed integrally on the ends of the bearing shell (23).

2. A tilting bearing according to claim 1, characterised in that the projections (28, 31; 29, 31) comprise bent-out parts of the bearing shell (23).

3. A tilting bearing according to claim 1 or claim 2, characterised in that the projections (28, 31; 29, 31) extend radially.

4. A tilting bearing according to claim 2 and claim 3, characterised in that the bent-out parts comprise tongues bent out along cuts (35).

5. A tilting bearing according to claim 4, characterised in that cuts are made into the bearing shell (23) on both sides from its narrow sides and in that the bent-out parts are S-shaped.

6. A tilting bearing according to at least one of the preceding claims, characterised in that grooves (34) are provided in the respective bearing part (3) to receive the lugs (31).

7. A tilting bearing according to at least one of the preceding claims, characterised in that damping elements are provided between the stops (26, 27) and the ends of the rolling bearing segment (9).

8. A tilting bearing according to at least one of the preceding claims, characterised in that damping elements are arranged between the lugs (31) and the contact surfaces (33).

9. A tilting bearing according to claim 7 or claim 8, characterised in that the damping elements are springs (compression springs 36 to 38).

10. A tilting bearing according to claim 8, characterised in that the supporting surface (25) of the bearing part (3) carrying the bearing shell (23) and/or the outer surface (24) of the bearing shell (23) is provided with a lubricating layer (39).

**Revendications**

1. Palier oscillant pour le dispositif de réglage d'une machine à pistons axiaux à débit volumétrique variable, en particulier d'une machine à pistons axiaux du type à plateau oblique, avec deux parties du palier pivotantes l'une par rapport à l'autre, dont l'une présente une portée concave en forme de segment de cylindre et l'autre présente une portée convexe en forme de segment de cylindre, ces portées ayant le même centre de courbure, un segment de roulement à rouleaux étant logé entre elles, et avec des butées pour limiter le mouvement du segment de roulement à rouleaux,

**caractérisé** en ce qu'au moins une des portées (17, 18) est constituée, de manière connue en soi, d'une coquille de palier (23) qui s'applique sur une surface d'appui (25) de la partie de palier (3) correspondante, et est maintenue sur celle-ci au moyen d'appendices (31) qui sont sous la forme de parties saillantes formées d'une seule pièce sur les extrémités de la coquille de palier (23) et qui s'appliquent par leurs faces intérieures (32) tournées l'une vers l'autre sur des surfaces d'appui (33) de la partie de palier (3) servant d'appui à la coquille de palier (23), et en ce que les butées (26, 27) pour limiter le mouvement du segment de palier à rouleaux (19) sont également sous la forme de parties saillantes (26, 28; 27, 29) formées d'une seule pièce sur les extrémités de la coquille de palier (23).

2. Palier oscillant selon la revendication 1, caractérisé en ce que les parties saillantes (28, 31; 29, 31) sont formées par des parties recourbées de la coquille de palier (23).

3. Palier oscillant selon la revendication 1 ou 2, caractérisé en ce que les parties saillantes (28, 31; 29, 31) s'étendent radialement.

4. Palier oscillant selon les revendications 2 et 3, caractérisé en ce que les parties recourbées sont constituées par des languettes courbées le long d'entailles (35).

5. Palier oscillant selon la revendication 4, caractérisé en ce que la coquille de palier (23) est entaillée de part et d'autre à partir de ses côtés étroits et que les parties courbées sont courbées en forme de S.

6. Palier oscillant selon au moins une des revendications précédentes, caractérisé en ce que des rainures (34) sont prévues dans la partie de palier (3) concernée pour recevoir les appendices (31).

7. Palier oscillant selon au moins une des revendications précédentes, caractérisé en ce que des éléments d'amortissement sont disposés entre les butées (26, 27) et les extrémités frontales du segment de roulement à rouleaux (19).

8. Palier oscillant selon au moins une des revendications précédentes, caractérisé en ce que des éléments d'amortissement sont disposés entre les appendices (31) et les surfaces d'appui (33).

9. Palier oscillant selon la revendication 7 ou 8, caractérisé en ce que les éléments d'amortissement sont constitués par des ressorts (ressorts travaillant à la compression, 36 à 38).

10. Palier oscillant selon la revendication 8, caractérisé en ce que la surface d'appui (25) de la partie de palier (3) portant la coquille de palier (23) et/ou la surface externe (24) de la coquille de palier (23) est munie d'une couche de glissement (39).

EP 0 237 750 B1

FIG. 1

FIG. 2

# FIG. 3

# FIG. 4